Europäisches Patentamt

European Patent Office

Office européen des brevets

(11) Publication number: **0 211 454**
**A1**

(12) **EUROPEAN PATENT APPLICATION**

(21) Application number: **86201136.8**

(22) Date of filing: **27.06.86**

(51) Int. Cl.⁴: **F 16 L 13/14**
**B 21 D 39/04, F 01 N 7/18**

(30) Priority: **16.07.85 NL 8502040**

(43) Date of publication of application:
**25.02.87 Bulletin 87/9**

(84) Designated Contracting States:
**BE DE FR GB IT NL SE**

(71) Applicant: **Volvo Car B.V.**
**Steenovenweg 1**
**NL-5708 HN Helmond(NL)**

(72) Inventor: **De Rijk, Anton**
**St. Victor 20**
**NL-5571 RM Bergeyk(NL)**

(74) Representative: **Timmermans, Anthonius C.Th., Ir.**
**European Patent Attorneys Octrooibureau Zuid P.O. Box 2287**
**NL-5600 CG Eindhoven(NL)**

(54) Process and device for effecting a gas-tight joint and joint so produced.

(57) A process for effecting a gas-tight joint between two pipes intended for the transport of pressurized gas of which the end parts to be joined are partly slid across one another, and the outer one is subjected to plastic deformation over at least a part of its circumference and length by means of radially acting forces, exerted with the aid of a device (13, 14) embracing the pipe ends, and provided with one or more radially acting stamps (15) actuated by hydraulic or hydropneumatic means.

FIG. 9

EP 0 211 454 A1

N655 — 1 -

Process and device for effecting a gas-tight pipe joint and joint so produced

The invention relates to a process for effecting a gas-tight joint between two pipes intended for the transport of pressurized gas of which the end parts to be joined have been partly slid across one another, and at least the outer one is subjected to plastic deformation over at least a part of its circumference and its length by means of radially acting forces, which radially acting forces are exerted with the aid of a device which embraces the pipe ends. The invention aims to provide a solution for a problem which mainly confronts the motorcar industry and garages in the design, assembly and disassembly of exhaust pipes. These pipes generally consist of three parts and the two joints in this system are very hard to render sufficiently gas-tight. The known way of joining two pipe sections consists in widening one pipe end such that it can be slid across the other end after a number of longitudinal slots have been cut in it, whereupon the joint is sealed by adhesive bonding and a clamp is applied around it.

According to the invention, a substantial improvement is obtained when the device is provided with one or more stamps acting in a radial direction, and actuated by a pressure produced by hydraulic or hydropneumatic means.

As there is generally very little space available at the location where the joints have to be made, the device must comply with special requirements. According to the invention, it is characterized in that it is a hand-operated tool provided with a ring to be mounted on the pipe ends in which radially movable stamps have been incorporated.

In addition, it is advantageous if the ring consists of at least two segments hingeably connected together and if clamping means are present for locking of the ring. In that case, the device can be applied in situ to the joint without any inconvenience due to differences in diameter of the pipes as commonly occur in the exhaust pipes of motorcars because of the presence of silencers.

Surprisingly, it has been found that an advantageous embodiment of the gas-tight pipe joint according to the invention is characterized in that the outer pipe end has not only undergone plastic deformation but has also been provided with one or more longitudinal slots.

Also according to the invention, it is possible to insert a ring gasket between the pipe ends. Such a ring is preferably made of braided metallic wire.

A particularly interesting embodiment of the invention is one which is characterized in that the two pipe ends are partly of a spherical design and the pipe sections are hingeably connected together.

The invention presents the concomitant advantage of saving in materials in that it renders the use of sealing compounds and clamps unnecessary.

The invention will now be elucidated with reference to the drawings, in which

Figure 1 schematically represents the exhaust system of a motorcar;

Figure 2 is a diagrammatic view of a pipe joint according to the invention;

Figure 3 is a section taken along the line II-II of Figure 2;

Figure 4 and 5 represent other embodiments of the invention;

Figure 6 depicts an embodiment which is a variant of that according to Figure 4;

Figure 7 and 8 represent an embodiment featuring a ring gasket, partly viewed in section and partly in side elevation; and

Figure 9 is a sectional view of the device to be applied according to the invention.

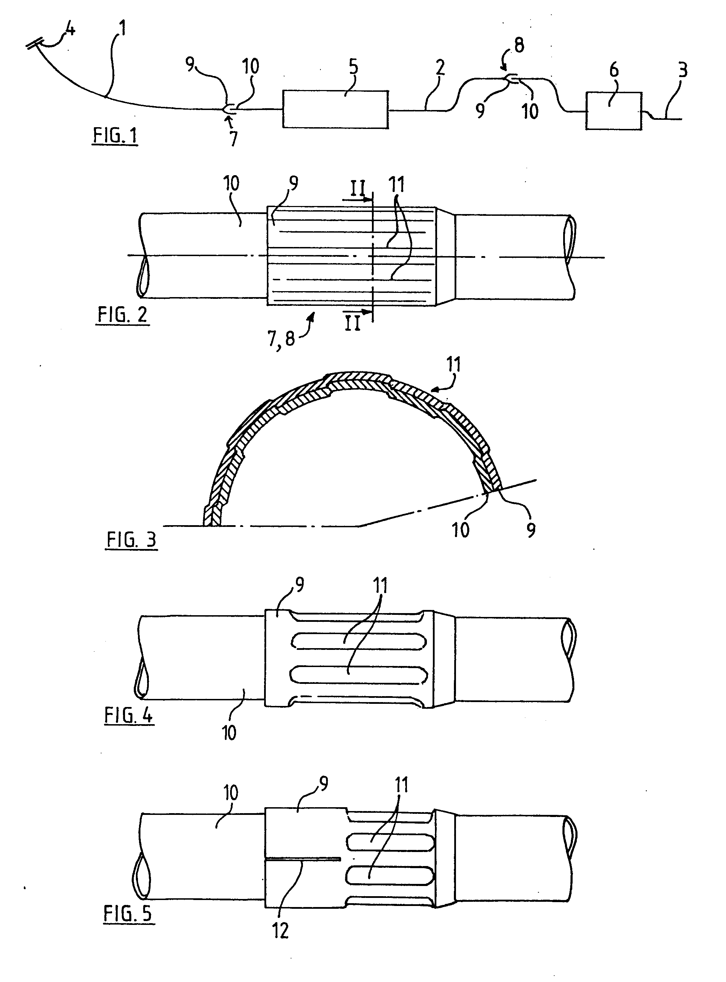

In Figure 1, three sections of the exhaust system of a motorcar are denoted by 1, 2 and 3. The pipes used are made of metal and have a diameter of 40 to 60 mm and a wall thickness of 1 to 2 mm. Pipe section 1 is connected to the engine at point 4 and sections 2 and 3 are provided with silencers 5 and 6. Between the sections 1, 2 and 3 there are joints 7 and 8, each consisting of a widened pipe end 9 into which a pipe end 10 has been slid. Till now, these joints have been secured by means of a sealing compound and a clamp which have not, however, been able adequately to prevent leakage of the exhaust gas being under a positive pressure of approximately 0.3 bar.

In the pipe joint represented in Figure 2, the telescoped ends 9 and 10 are subjected to plastic deformation whereby a cross-section as shown in Figure 3 is formed. In this treatment the joint is exposed to radial forces which act inwardly from the outside and have caused the plastic deformations 11 with the aid of stamps owing to compressive loading of the material beyond the yield point. In the instance shown in Figure 2, these deformations extend over the entire length of the joint.

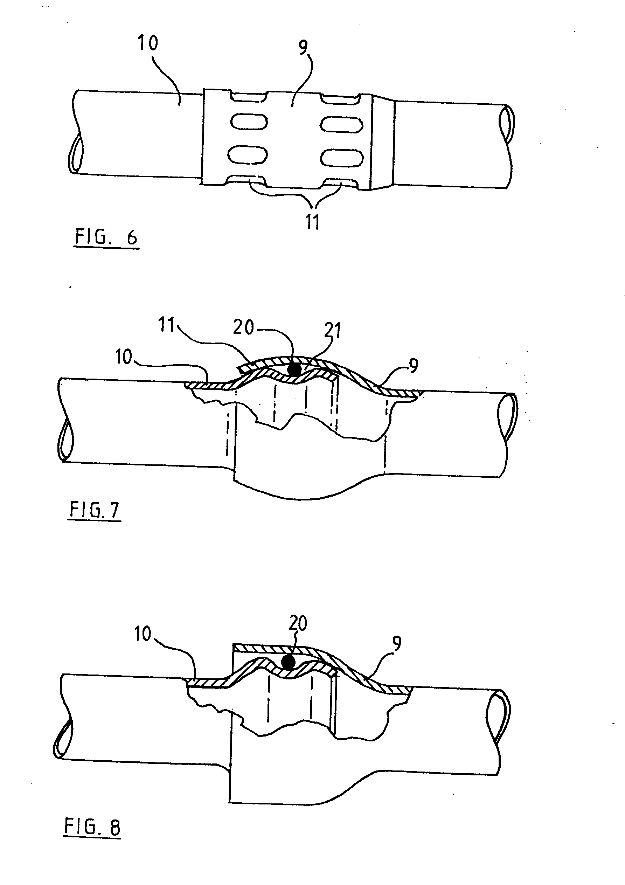

In the instance depicted in Figure 4, the length of the deformations 11 is restricted. The same is true for the instance according to Figure 5, which is also provided with a slot 12 such that the said slot and the deformations are longitudinally in line. Surprisingly,tests have shown that this is the most advantageous embodiment.

In the instance according to Figure 6, two rows of deformations of restricted length have been applied in the longitudinal direction. In consequence, the associated device to be described hereinafter may be smaller in an axial direction and hence lighter, but it has to be used twice.

The embodiment according to Figure 7 and 8, which Figure 8 shows the joint before the deformation and Figure 7 after the deformation, features a ring gasket 20 which preferably consists of braided metallic wire. In this embodiment the pipe end 10 is partly of a bulbous design with a cavity 21 for ring 20. The pipe end 9 is likewise partly of a bulbous design, the spherical shape being partially obtained by plastic deformation, after the ends 9 and 10 with the ring 20 have been slid one into another. This design permits hinging of the pipe sections relative to one another through a certain angle.

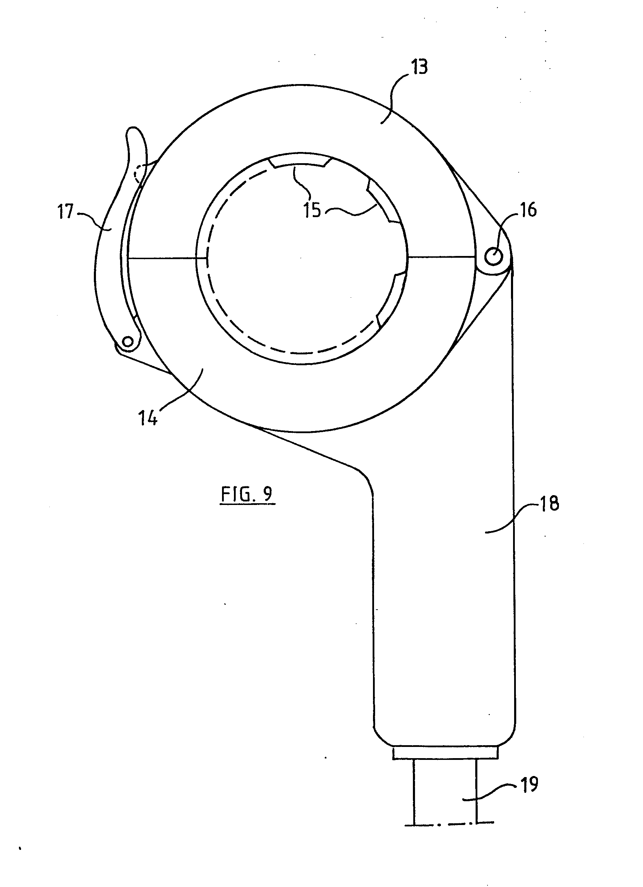

The device to be used according to Figure 9 is a hand-operated tool which must neither be bulky considering the generally small space that is available nor be heavy inasmuch as it will commonly have to be applied over one's head. It preferably consists of a split ring 13, 14, whose parts are interconnected by means of a hinge 16. After being fitted round the pips ends to be joined, the ring is locked with the aid of a clamp 17. The device further comprises a handle 18 and a hydraulic connecting socket 19. The inside of the ring 13, 14 is provided with stamps 15 which are radially displaceable by hydraulic oil pressure.

Claims:

1. A process for effecting a gas-tight joint between two pipes intended for the transport of pressurized gas of which the end parts to be joined have been partly slid across one another, and at least the outer one is subjected to plastic deformation over at least a part of its circumference and its length by means of radially acting forces, which radially acting forces are exerted with the aid of a device which embraces the pipe ends, characterized in that the device is provided with one or more stamps (15) acting in a radial direction, and actuated by a pressure produced by hydraulic or hydropneumatic means.

2. A device for carrying out the process according to claim 1, characterized in that it is a hand-operated tool provided with a ring (13,14) to be mounted on the pipe ends (9) in which radially movable stamps (15) have been incorporated

3. A device according to claim 2, characterized in that the ring consists of at least two segments (13, 14) hingeably connected together and that clamping means (17) are present for locking of the ring.

4. A gas-tight pipe joint obtained by application of the process according claim 1.

5. A gas-tight pipe joint according to claim 4 obtained by the application of a device according to claim 2 or 3.

6. A gas-tight pipe joint according to claim 4 or 5, characterized in that the outer pipe end (9) is provided with one or more longitudinal slots (12).

7. A gas-tight pipe joint according to claim 4 or 5, characterized in that a ring gasket (20) has been inserted between the pipe ends (9, 10).

8. A gas-tight joint according to claim 7, characterized in that the ring gasket (20) is made of braided matallic wire.

9. A gas-tight pipe joint according to claim 8, characterized in that the pipe ends (9, 10) are partly of a spherical design and the pipe sections are hingeably connected together.

FIG. 1

FIG. 2

FIG. 3

FIG. 4

FIG. 5

FIG. 6

FIG. 7

FIG. 8

FIG. 9

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | CH-A- 648 643 (FISCHER)<br>* The whole document * | 1,2 | F 16 L 13/14<br>B 21 D 39/04<br>F 01 N 7/18 |
| A | | 3-5,7 | |
| Y | DE-A-2 622 706 (VAHLBRAUK)<br>* Claims; figures * | 1 | |
| A | | 2-8 | |
| Y | FR-A-2 086 319 (DRESSER)<br>* Figures; claims * | 1 | |
| A | | 2-5 | |
| A | DE-A-2 725 280 (MANNESMANN)<br>* Abstract; figure 1 * | 1-8 | TECHNICAL FIELDS SEARCHED (Int Cl 4)<br><br>F 16 L |
| A | DE-A-2 404 083 (LICENTIA)<br><br>* Claims; figure 2 * | 1,2,4,<br>5,7,8 | |
| A | GB-A-2 134 614 (MANNESMANN)<br><br>* Abstract; figure 1 * | 1,2,4,<br>5,7 | |
| | --- -/- | | |

The present search report has been drawn up for all claims

| Place of search | Date of completion of the search | Examiner |
|---|---|---|
| THE HAGUE | 22-09-1986 | SCHAEFFLER C.A.A. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int Cl.4) |
|---|---|---|---|
| A | US-A-4 151 632 (GREEN)<br>* Abstract; figure 6 * | 1,9 | |
| A | US-A-4 426 761 (SASSAK)<br>* Figures 1,2,6; abstract; claim * | 1-5 | |

TECHNICAL FIELDS
SEARCHED (Int Cl 4)

The present search report has been drawn up for all claims

| Place of search | Date of completion of the search | Examiner |
|---|---|---|
| THE HAGUE | 22-09-1986 | SCHAEFFLER C.A.A. |